# EUROPEAN PATENT SPECIFICATION

(11) **EP 3 995 404 B1**
(45) Date of publication and mention of the grant of the patent: **07.02.2024**
(21) Application number: 21754887.4
(22) Date of filing: 14.01.2021
(51) Int. Cl.: B29C 65/18, B29C 65/74, B65B 51/16, B65B 51/30, B65B 61/06

(54) **ROTARY SEALING AND CUTTING DEVICE**
ROTIERENDE SIEGEL- UND SCHNEIDVORRICHTUNG
DISPOSITIF DE SCELLEMENT ET DE COUPE ROTATIF

(30) Priority: 12.09.2020 CN 202010957180
(43) Date of publication of application: 11.05.2022
(73) Proprietor: ZHEJIANG HOPING MACHINERY CO., LTD., Technology Industrial Zone Wenzhou Zhejiang 325200 (CN)
(72) Inventor: LI, Wenlei, Zhejiang 325200 (CN); YANG, Yifu, Zhejiang 325200 (CN); HU, Xinlong, Zhejiang 325200 (CN)
(74) Representative: Bayramoglu et al.
(86) International application number: PCT/CN2021/071656
(87) International publication number: WO 2022/052397

(56) References cited:
- CN-A- 105 667 906
- CN-A- 106 428 813
- CN-A- 106 428 813
- CN-A- 112 078 896
- CN-U- 206 511 233
- CN-U- 206 511 233
- CN-U- 212 474 196
- US-A- 3 850 780
- US-A1- 2007 199 279
- US-A1- 2017 129 633

## Description

### TECHNICAL FIELD

The present disclosure relates to a packaging machine, in particular to a sealing and cutting device (an end-sealing device) of a packaging machine.

### BACKGROUND

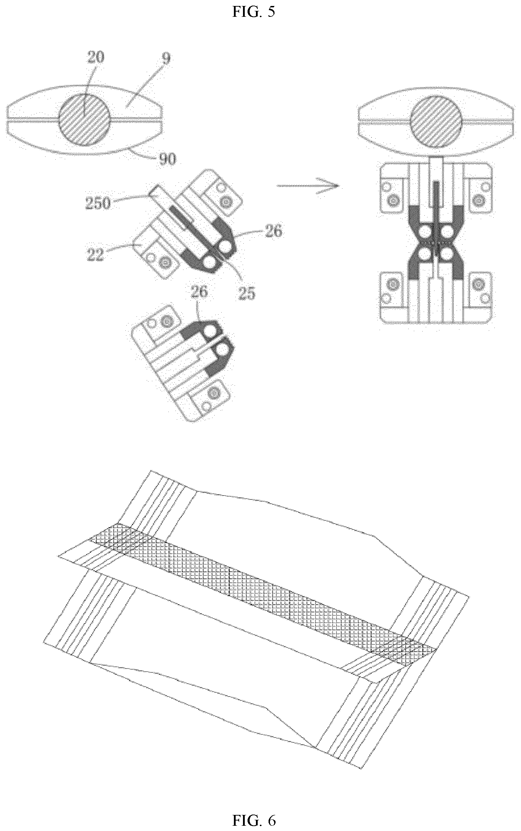

As shown in FIG. 6, the pillow-type bag is a plastic packaging bag commonly used for packaging bread, chocolate, tablets and other items in daily life. The pillow-type bag is made by using a pillow-type packaging machine, and the manufacturing process thereof is briefly described as follows. A roll of plastic film is pulled to pass through a make-up machine, so as to form a shape that wraps an item. Two sides of the plastic film are overlapped before a middle sealing process, and then the overlapped sides of the plastic film are heat-sealed by a middle sealing device to form transverse sealing edges. Finally, the plastic film is end-sealed, where the plastic film is cut by an end-sealing device, and the bag opening (namely an end opening) is heat-sealed into a longitudinal sealing edge while cutting, thereby forming a sealed pillow-type bag. The existing end-sealing device on the market includes upper and lower heat-sealing assemblies. The upper heat-sealing assembly includes a sealer and a cutter, and the lower heat-sealing assembly includes a sealer and a cutter groove. The upper and lower sealing sealers are pressed together to realize sealing, and the cutter cooperates with the cutter groove to realize cutting. However, the existing end-sealing device is usually a single-cutter reciprocating sealing device, and requires high manufacturing precision that is not easy to implement. In addition, the sealing and cutting device involves horizontal reciprocating motion, which will inevitably generate a large impact load. Therefore, this sealing and cutting device has to be provided with a series of structures to eliminate the impact and balance the load, which increases the difficulty of processing and assembly.
CN106428813 discloses an end sealing device of a pillow packing machine with a heat sealing effect. The end sealing device of the pillow packing machine comprises a frame, an upper cutter module and a lower cutter module.

### SUMMARY

### Technical Problem

In order to solve the shortcomings of the prior art, the present disclosure provides a rotary sealing and cutting device that is capable of high-speed sealing and cutting.

### Technical Solution

A rotary sealing and cutting device includes a frame and upper and lower sealing and cutting mechanisms, where the sealing and cutting mechanism includes a rotating shaft, a rotating base and a sealing and cutting assembly; the rotating base is connected to the rotating shaft; the rotating shaft is in transmission connection with a power source that drives the rotating shaft to rotate; the sealing and cutting assembly comprises a sealer, a cutter holder, a sliding block, a guide wheel base and guide wheels; the sealer is provided on the cutter holder; the cutter holder is connected to the guide wheel base through a connecting shaft; the sliding block is rotatably provided on the connecting shaft and slidably provided on the rotating base; there are two or more guide wheels that are provided on the guide wheel base; the frame is provided thereon with an upper guide plate and a lower guide plate; the upper guide plate and the lower guide plate are respectively provided with a D-ring groove; linear groove sections of the upper and lower D-ring grooves are adjacent and parallel; the guide wheel of the upper sealing and cutting mechanism is in the D-ring groove of the upper guide plate; the guide wheel of the lower sealing and cutting mechanism is in the D-ring groove of the lower guide plate.

A cutter is provided on the cutter holder of the upper sealing and cutting mechanism; the cutter is located in a middle position of the sealer; the sealer of the lower sealing and cutting mechanism is provided with a cutter groove corresponding to the cutter.

The cutter may be slidably provided on the cutter holder; the cutter may be in transmission connection with a driving mechanism that may drive the cutter to slide.

The driving mechanism may include an elastic member and a pressing member; the elastic member may be provided between the cutter and the cutter holder and may drive the cutter to retract; an acting member may be connected to the cutter; the pressing member may be connected to the rotating shaft; the pressing member has a pressing arc surface; the pressing member is configured to act on the acting member by the pressing arc surface to drive the cutter to extend.

The acting member may be a guide post, and the guide post may be slidably provided in a guide hole of the cutter holder.

The rotating shaft of the upper sealing and cutting mechanism may be rotatably provided on the upper guide plate; the upper guide plate may be vertically slidably provided on the frame; a spring for driving the upper guide plate to move downward may be provided between the frame and the upper guide plate.

An upper gear may be connected to the rotating shaft of the upper sealing and cutting mechanism; a lower gear may be connected to the rotating shaft of the lower sealing and cutting mechanism; the upper gear meshes with the lower gear; the power source may be in transmission connection with the lower gear or the upper gear through a transmission gear.

The rotating shaft may be connected to a central position of the rotating base; two ends of the rotating base may be respectively provided with the sealing and cutting assembly.

The rotating base may be provided with a sliding groove; the sliding block may be slidably provided in the sliding groove of the rotating base.

The guide wheel may be a pulley or a bearing.

### Beneficial Effects

The rotary sealing and cutting device adopts the upper and lower sealing and cutting mechanisms with a rotary structure, which avoids the impact and load caused by the horizontal reciprocating motion in the prior art. In addition, the rotary sealing and cutting device is provided with a D-ring groove to make the sealer move along a D-shaped track, which prolongs the sealing time to achieve the best high-speed heat-sealing effect of the packaging film, thereby meeting the air tightness requirement for sealing.

### BRIEF DESCRIPTION OF THE DRAWINGS

FIG. 1 is a schematic structural diagram of the present disclosure.
FIG. 2 is a schematic structural diagram of a heat-sealing mechanism according to the present disclosure.
FIG. 3 is a heat-sealing diagram of upper and lower heat-sealing mechanisms.
FIG. 4 is a cross-sectional view of a cutter holder part.
FIG. 5 is a process diagram of pressing a cutter by a pressing member.
FIG. 6 is a schematic structural diagram of a pillow-type bag.

### DETAILED DESCRIPTION OF THE EMBODIMENTS

### Implementations of the Disclosure

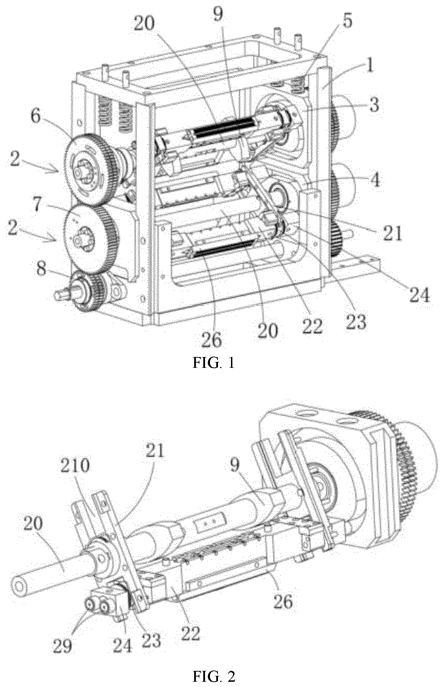

As shown in FIG. 1, a rotary sealing and cutting device includes a frame 1 and upper and lower sealing and cutting mechanisms 2. A transversely sealed packaging film passes between the upper and lower sealing and cutting mechanisms 2 to form individual packaging bags, as shown in FIG. 6.

As shown in FIGS. 1 and 2, the sealing and cutting mechanism 2 includes a rotating shaft 20, a rotating base 21 and a sealing and cutting assembly. The rotating base 21 is connected to the rotating shaft 20. The rotating shaft 20 is in transmission connection with a power source that drives the rotating shaft 20 to rotate. Driven by the power source, the rotating shaft 20 rotates, such that the rotating base 21 on the rotating shaft 20 rotates. The sealing and cutting assembly includes a sealer 26, a cutter holder 22, a sliding block 23, a guide wheel base 24 and guide wheels 29. The sealer 26 has a heat-sealing surface, and the sealer 26 is provided on the cutter holder 22. The cutter holder 22 is connected to the guide wheel base 24 through a connecting shaft 27. The sliding block 23 is rotatably provided on the connecting shaft 27 through a bearing. The sliding block 23 is further slidably provided on the rotating base 21. The sliding block 23 is able to slide on the rotating base 21 by various means, such as a guide rail, a guide rod or a guide groove. In the present disclosure, specifically, a sliding groove 210 is provided on the rotating base 21, and the sliding block 23 is provided in the sliding groove 210 of the rotating base 21. There are two or more guide wheels 29 that are provided on the guide wheel base 24. The frame 1 is provided with an upper guide plate 3 and a lower guide plate 4. The upper guide plate 3 is provided with a D-ring groove 30. The lower guide plate 4 is also provided with a D-ring groove. Linear groove sections of the upper and lower D-ring grooves 30 are adjacent and parallel. The guide wheel 29 of the upper sealing and cutting mechanism is located in the D-ring groove 30 of the upper guide plate 3, and the guide wheel of the lower sealing and cutting mechanism is located in the D-ring groove of the lower guide plate 4.

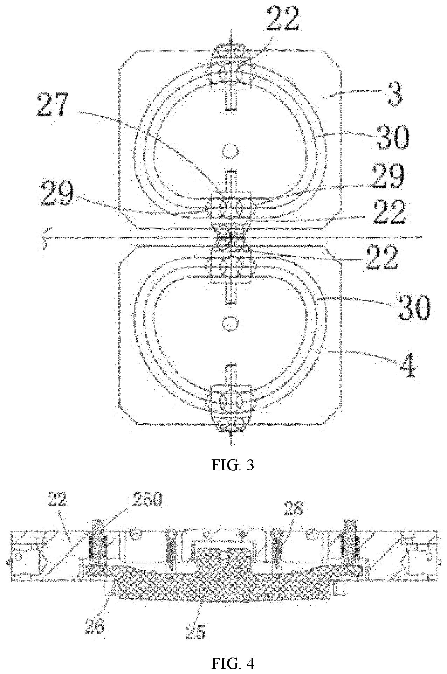

The working principle of the rotary sealing and cutting device is as follows. As shown in FIGS. 2 and 3, the power source drives the rotating shafts 20 of the upper and lower sealing and cutting mechanisms 2 to rotate, and the sealing and cutting assembly of the upper sealing and cutting mechanism and the sealing and cutting assembly of the lower sealing and cutting mechanism are rotated synchronously. Guided by the guide wheels 29, the sealing and cutting assembly moves vertically along a D-ring track in the D-ring groove 30. When the guide wheel 29 transitions from an arc groove section of the D-ring groove 30 to the linear groove section thereof, the guide wheel 29 forces the sliding block 23 to slide on the rotating base 21 through the connecting shaft 27 due to a change in diameter. Since the sliding block 23 is rotatably provided on the connecting shaft 27 through a bearing and the connecting shaft 27 connects the cutter holder 22 with the guide wheel base 24, the entire sealing and cutting assembly moves relative to the rotating base 21. In this way, the guide wheel 29 of the sealing and cutting assembly can enter into the linear groove section of the D-ring groove 30. When the guide wheel 29 enters the linear groove section of the D-ring groove 30, since the linear groove sections of the upper and lower D-ring grooves 30 are adjacent and parallel, the upper sealer 26 and the lower sealer are pressed together. Thus, the packaging film is heat-sealed. The linear groove section of the D-ring groove 30 has a certain length. There are two or more guide wheels 29 on one guide wheel base 24, and these guide wheels 29 can restrict the rotation of the connecting shaft 27 in the linear groove section. That is, because the sliding block 23 is rotatably provided on the connecting shaft 27, the connecting shaft 27 will not be driven to rotate when the sliding block 23 rotates with the rotating base 21. Thus, when the guide wheel 29 is in the linear groove section, the cutter holder 22 is always in a horizontal state. In this way, during the travel of the guide wheel 29 in the linear groove section of the D-ring groove 30, the heat-sealing surface of the sealer 26 is always in a horizontal state, and the upper and lower sealing sealers 26 have a certain length of time to be pressed together. Consequently, the sealing time is prolonged, so even in the case of high-speed rotation, the packaging film can still obtain the best heat-sealing effect, thereby meeting the air tightness requirement for sealing.

Of course, when the upper and lower sealing and cutting assemblies heat-seal, the packaging film also needs to be cut. To this end, as shown in FIG. 5, a cutter 25 is provided on the cutter holder 22 of the upper sealing and cutting mechanism. The cutter 25 is located in a middle position of the sealer 26. The sealer 26 of the lower sealing and cutting mechanism is provided with a cutter groove corresponding to the cutter 25. When the upper sealer 26 and the lower sealer are pressed together, the upper cutter 25 enters the lower cutter groove, such that a packaging bag can be cut from the continuous packaging film. Since the cutter 25 is located in the middle position of the sealer 26, the sealer 26 can simultaneously complete the end sealing of two adjacent packaging bags through one cutting action.

In order to drive the cutter 25 to perform the cutting action, the cutter 25 is slidably provided on the cutter holder 22. The cutter 25 is in transmission connection with a driving mechanism that drives the cutter 25 to slide. Driven by the driving mechanism, the cutter 25 enters the cutter groove to cut the packaging film.

The driving mechanism may use a power source such as a cylinder or a motor, but this will increase the cost. Moreover, since the sealing and cutting assembly involves rotating motion, the structure will be more complicated. In order to simplify the structure and reduce the cost, as shown in FIGS. 4 and 5, the driving mechanism adopts a combination of an elastic member 28 (which is a tension spring) and a pressing member 9. The elastic member 28 is provided between the cutter 25 and the cutter holder 22 and drives the cutter 25 to retract. The pressing member 9 is connected to the rotating shaft 20, and the pressing member 9 has a pressing arc surface 90. An acting member 250 is connected to the cutter 25. The pressing member 9 can rotate together with the rotating shaft 20, and when the guide wheel 29 transitions from the arc groove section of the D-ring groove 30 to the linear groove section thereof, the cutter holder 22 approaches the rotating shaft 20. In this way, the pressing member 9 gradually acts on the acting member 250 through the pressing arc surface 90 to drive the cutter 25 to extend. With this structure, no power source is needed. Instead, it only needs the rotating shaft 20 to rotate and drive the pressing member 9 to press on the cutter 25, such that the cutter 25 realizes the cutting action. Such a driving mechanism has a more reasonable structure, a lower cost, is not prone to failure, and reduces noise compared with a previous cylinder-driven cutter. In addition, because it is driven by pure mechanical motion, the cutting accuracy is improved.

It is worth mentioning here that if the position of the cutter is set, no driving mechanism is required, either. When the upper and lower sealing sealers 26 are gradually pressed together, the cutter 25 will gradually enter the cutter groove, such that the cutting action can also be completed. However, in this way, the depth of the cutter 25 into the cutter groove is insufficient, that is, a large cutting action cannot be achieved. In other words, the cutting action can be achieved for a thin packaging film, but the cutting effect for a thick packaging film may not be desirable.

Since the cutter 25 is slidable on the cutter holder 22, the cutter holder 22 may be provided with a sliding groove or a guide rail to make the cutter 25 slidable on the cutter holder 22. However, this structure is complicated, and the processing is inconvenient. In order to simplify the structure, the acting member 250 is configured as a guide post, and the guide post is slidably provided in a guide hole of the cutter holder 22. With this structure, the guide post slidable in the guide hole of the cutter holder 22 plays a guiding role, and can also interact with the pressing member 9. This structure is more reasonable, and the processing is more convenient.

In order to adjust the pressing force of the upper and lower sealing sealers 26, the rotating shaft 20 of the upper sealing and cutting mechanism is rotatably provided on the upper guide plate 3. The upper guide plate 3 is vertically slidably provided on the frame 1. A spring 5 for driving the upper guide plate 3 to move downward is provided between the frame 1 and the upper guide plate 3. The spring 5 can press the upper guide plate 3. Since the rotating shaft 20 of the upper sealing and cutting mechanism is rotatably provided on the upper guide plate 3, the sealer 26 of the upper sealing and cutting mechanism 2 has a tendency to move downward. In this way, the pressure between the upper and lower sealing sealers 26 can be adjusted by using different springs 5 to adapt to the heat-sealing of packaging films of different thicknesses. Of course, in addition, even if the upper and lower sealing sealers 26 are pressed against a hard object accidentally dropped into them, the sealing sealers 26 will not be damaged due to the elasticity of the upper sealing and cutting mechanism 2. It is worth mentioning here that if the above factors are not considered, the upper guide plate 3 and the lower guide plate 4 may be one plate.

An upper gear 6 is connected to the rotating shaft 20 of the upper sealing and cutting mechanism 2. A lower gear 7 is connected to the rotating shaft of the lower sealing and cutting mechanism. The upper gear 6 meshes with the lower gear 7. The power source is in transmission connection with the lower gear 7 or the upper gear 6 through a transmission gear 8. When one gear rotates clockwise, the other gear rotates counterclockwise. In order to drive the gear to rotate, the lower gear 7 or the upper gear 6 meshes with the transmission gear 8. The transmission gear 8 is in transmission connection with the power source (motor). Driven by the power source (motor), the transmission gear 8 is rotated, such that the lower gear 7 and the upper gear 6 are rotated.

As shown in FIG. 2, one sealing and cutting assembly may be provided on one rotating base 21, such that the rotating base rotates once to complete one sealing and cutting action. In order to improve efficiency, the rotating shaft 20 is connected to the central position of the rotating base 21. Two ends of the rotating base 21 are respectively provided with a sealing and cutting assembly, that is, two sealing and cutting assemblies are provided on one rotating base 21. In this way, the rotary base 21 completes one sealing and cutting action by rotating half a circle, and completes two sealing and cutting actions by rotating a circle, which doubles the efficiency. Of course, three or more sealing and cutting assemblies may also be provided on the rotating base 21, which can greatly improve the sealing and cutting efficiency. However, the configuration of two sealing and cutting assemblies on one rotating base 21 can achieve the sealing and cutting of 300 bags per min, which can already meet the production requirement of the highest-speed packaging machine on the market.

## Claims

1. A rotary sealing and cutting device, comprising a frame (1) and upper and lower sealing and cutting mechanisms (2) for sealing and cutting operations, wherein the sealing and cutting mechanism (2) comprises a rotating shaft (20), a rotating base (21) and a sealing and cutting assembly; the rotating base (21) is connected to the rotating shaft (20); the rotating shaft (20) is in transmission connection with a power source that drives the rotating shaft (20) to rotate; the sealing and cutting assembly comprises a sealer (26), a cutter holder (22), a sliding block (23), a guide wheel base (24) and guide wheels (29); the sealer (26) is provided on the cutter holder (22); the cutter holder (22) is connected to the guide wheel base (24) through a connecting shaft (27); the sliding block (23) is rotatably provided on the connecting shaft (27) and slidably provided on the rotating base (21); two or more guide wheels (29) are provided on the guide wheel base (24); the frame (1) is provided thereon with an upper guide plate (3) and a lower guide plate (4); the upper guide plate (3) and the lower guide plate (4) are respectively provided with a D-ring groove (30); linear groove sections of the upper and lower D-ring grooves (30) are adjacent and parallel; the guide wheels (29) of the upper sealing and cutting mechanism are in the D-ring groove (30) of the upper guide plate (3); the guide wheels of the lower sealing and cutting mechanism are in the D-ring groove (30) of the lower guide plate (4); wherein a cutter (25) is provided on the cutter holder of the upper sealing and cutting mechanism (2); the cutter (25) is located in a middle position of the sealer (26); the sealer (26) of the lower sealing and cutting mechanism (2) is provided with a cutter groove corresponding to the cutter (25).

2. The rotary sealing and cutting device according to claim 1, wherein the cutter (25) is slidably provided on the cutter holder (22); the cutter (25) is in transmission connection with a driving mechanism that drives the cutter (25) to slide.

3. The rotary sealing and cutting device according to claim 2, wherein the driving mechanism comprises an elastic member (28) and a pressing member (9); the elastic member (28) is provided between the cutter (25) and the cutter holder (22) and drives the cutter (25) to retract; an acting member (250) is connected to the cutter (25); the pressing member (9) is connected to the rotating shaft (20); the pressing member (9) has a pressing arc surface (90); the pressing member (9) is configured to act on the acting member (250) by the pressing arc surface (90) to drive the cutter (25) to extend.

4. The rotary sealing and cutting device according to claim 3, wherein the acting member (250) is a guide post, and the guide post is slidably provided in a guide hole of the cutter holder (22).

5. The rotary sealing and cutting device according to claim 1, wherein the rotating shaft (20) of the upper sealing and cutting mechanism is rotatably provided on the upper guide plate (3); the upper guide plate (3) is vertically slidably provided on the frame (1); a spring (5) for driving the upper guide plate (3) to move downward is provided between the frame (1) and the upper guide plate (3).

6. The rotary sealing and cutting device according to claim 1, wherein an upper gear (6) is connected to the rotating shaft (2) of the upper sealing and cutting mechanism; a lower gear (7) is connected to the rotating shaft of the lower sealing and cutting mechanism; the upper gear (6) meshes with the lower gear (7); the power source is in transmission connection with the lower gear (7) or the upper gear (6) through a transmission gear (8).

7. The rotary sealing and cutting device according to claim 1, wherein the rotating shaft (20) is connected to a central position of the rotating base (21); two ends of the rotating base (21) are respectively provided with the sealing and cutting assembly.

8. The rotary sealing and cutting device according to claim 1, wherein the rotating base (21) is provided with a sliding groove (210); the sliding block (23) is slidably provided in the sliding groove (210) of the rotating base (21).

9. The rotary sealing and cutting device according to claim 1, wherein the guide wheel (29) is a pulley or a bearing.

## Patentansprüche

1. Eine rotierende Versiegelungs- und Schneidevorrichtung, bestehend aus einem Rahmen (1) und einem oberen und unteren Versiegelungs- und Schneidemechanismus (2) für Versiegelungs- und Schneidevorgänge, wobei der Versiegelungs- und Schneidemechanismus (2) eine Rotationswelle (20), eine Drehbasis (21) und eine Versiegelungs- und Schneidekonstruktion umfasst; die Drehbasis (21) ist mit der Rotationswelle (20) verbunden; die Rotationswelle (20) steht in Übertragungsverbindung mit einer Stromquelle, die die Rotationswelle (20) zu einer Drehbewegung antreibt; die Versiegelungs- und Schneidekonstruktion umfasst einen Versiegler (26), einen Messerhalter (22), einen Gleitblock (23), eine Führungsradbasis (24) und Führungsräder (29); der Versiegeler (26) ist am Messerhalter (22) angebracht; der Messerhalter (22) ist über eine Verbindungsstange (27) mit der Führungsradbasis (24) verbunden; der Gleitblock (23) ist drehbar auf der Verbindungsstange (27) angebracht und gleitend auf der Drehbasis (21) angeordnet; zwei oder mehr Führungsräder (29) sind auf der Führungsradbasis (24) angebracht; auf dem Rahmen (1) sind eine obere Führungsplatte (3) und eine untere Führungsplatte (4) angeordnet; die obere Führungsplatte (3) und die untere Führungsplatte (4) sind jeweils mit einer D-Ring-Nut (30) versehen; lineare Nutabschnitte der oberen und unteren D-Ring-Nuten (30) liegen parallel nebeneinander; die Führungsräder (29) des oberen Versiegelungs- und Schneidemechanismus liegen in der D-Ring-Nut (30) der oberen Führungsplatte (3); die Führungsräder des unteren Versiegelungs- und Schneidemechanismus liegen in der D-Ring-Nut (30) der unteren Führungsplatte (4); wobei ein Messer (25) am Messerhalter des oberen Versiegelungs- und Schneidemechanismus (2) angebracht ist; das Messer (25) befindet sich in einer mittleren Position des Versieglers (26); der Versiegler (26) des unteren Versiegelungs- und Schneidemechanismus (2) ist mit einer dem Messer (25) entsprechenden Messernut versehen.

2. Die rotierende Versiegelungs- und Schneidevorrichtung nach Anspruch 1, wobei das Messer (25) gleitend auf dem Messerhalter (22) angebracht ist; das Messer (25) steht in Übertragungsverbindung mit einem Antriebsmechanismus, der das Messer (25) zum Gleiten antreibt.

3. Die rotierende Versiegelungs- und Schneidevorrichtung nach Anspruch 2, wobei der Antriebsmechanismus ein elastisches Element (28) und ein pressendes Element (9) umfasst; das elastische Element (28) ist zwischen dem Messer (25) und dem Messerhalter (22) angeordnet und bewirkt das Zurückziehen des Messers (25); ein Wirkungselement (250) ist mit dem Messer (25) verbunden; das pressende Element (9) ist mit der Rotationswelle (20) verbunden; das pressende Element (9) verfügt über eine pressende Bogenfläche (90); das pressende Element (9) ist konfiguriert, um durch die pressende Bogenfläche (90) auf das Wirkungselement (250) zu wirken, wodurch das Ausfahren des Messers (25) bewirkt wird.

4. Die rotierende Versiegelungs- und Schneidevorrichtung nach Anspruch 3, wobei das Wirkungselement (250) ein Führungsstift ist, und der Führungsstift gleitend in einem Führungloch des Messerhalters (22) angeordnet ist.

5. Die rotierende Versiegelungs- und Schneidevorrichtung nach Anspruch 1, wobei die Rotationswelle (20) des oberen Versiegelungs- und Schneidemechanismus auf der oberen Führungsplatte (3) drehbar angeordnet ist; die obere Führungsplatte (3) ist vertikal gleitend auf dem Rahmen (1) angeordnet; eine Feder (5), um die obere Führungsplatte (3) zu einer Abwärtsbewegung anzutreiben, ist zwischen dem Rahmen (1) und der oberen Führungsplatte (3) angeordnet.

6. Die rotierende Versiegelungs- und Schneidevorrichtung nach Anspruch 1, wobei ein oberes Zahnrad (6) mit der Rotationswelle (2) des oberen Versiegelungs- und Schneidemechanismus verbunden ist; ein unteres Zahnrad (7) ist mit der Rotationswelle des unteren Versiegelungs- und Schneidemechanismus verbunden; das obere Zahnrad (6) greift in das untere Zahnrad (7) ein; die Stromquelle steht über ein Übertragungszahnrad (8) in Übertragungsverbindung mit dem unteren Zahnrad (7) oder dem oberen Zahnrad (6).

7. Die rotierende Versiegelungs- und Schneidevorrichtung nach Anspruch 1, wobei die Rotationswelle (20) mit einer zentralen Position der Drehbasis (21) verbunden ist; zwei Enden der Drehbasis (21) sind jeweils mit der Versiegelungs- und Schneidekonstruktion versehen.

8. Die rotierende Versiegelungs- und Schneidevorrichtung nach Anspruch 1, wobei die Drehbasis (21) mit einer Gleitnut (210) versehen ist; der Gleitblock (23) ist gleitend in der Gleitnut (210) der Drehbasis (21) angeordnet.

9. Die rotierende Versiegelungs- und Schneidevorrichtung nach Anspruch 1, wobei das Führungsrad (29) eine Rolle oder ein Kugellager ist.

## Revendications

1. Dispositif rotatif de scellement et de coupe, comprenant un cadre (1) et des mécanismes supérieur et inférieur de scellement et de coupe (2) pour les opérations de scellement et de coupe, dans lequel le mécanisme de scellement et de coupe (2) comprend un arbre rotatif (20), une base rotative (21) et un ensemble de scellement et de coupe ; la base rotative (21) est reliée à l'arbre rotatif (20) ; l'arbre rotatif (20) est en liaison de transmission avec une source d'énergie qui entraîne la rotation de l'arbre rotatif (20) ; l'ensemble de scellement et de coupe comprend un scelleur (26), un porte-couteau (22), un bloc coulissant (23), une base de roue de guidage (24) et des roues de guidage (29) ; le scelleur (26) est placé sur le porte-couteau (22) ; le porte-couteau (22) est relié à la base de roue de guidage (24) par un arbre de liaison (27) ; le bloc coulissant (23) est placé de manière rotative sur l'arbre de liaison (27) et placé de manière coulissante sur la base rotative (21) ; deux ou plusieurs roues de guidage (29) sont prévues sur la base de la roue de guidage (24) ; le cadre (1) est pourvu d'une plaque de guidage supérieure (3) et d'une plaque de guidage inférieure (4) ; la plaque de guidage supérieure (3) et la plaque de guidage inférieure (4) sont respectivement pourvues d'une rainure d'anneau en D (30) ; les sections linéaires des rainures d'anneau en D supérieures et inférieures (30) sont adjacentes et parallèles ; les roues de guidage (29) du mécanisme supérieur de scellement et de coupe sont dans la rainure d'anneau en D (30) de la plaque de guidage supérieure (3) ; les roues de guidage du mécanisme de scellement et de coupe inférieur se trouvent dans la rainure de l'anneau en D (30) de la plaque de guidage inférieure (4) ; un couteau (25) est placé sur le porte-couteau du mécanisme de scellement et de coupe supérieur (2) ; le couteau (25) se trouve dans une position médiane du scelleur (26) ; le scelleur (26) du mécanisme de scellement et de coupe inférieur (2) est pourvu d'une rainure de coupe correspondant au couteau (25).

2. Le dispositif rotatif de scellement et de coupe selon la revendication 1, dans lequel le couteau (25) est monté coulissant sur le porte-couteau (22) ; le couteau (25) est en liaison de transmission avec un mécanisme d'entraînement qui entraîne le couteau (25) dans son mouvement de glissement.

3. Le dispositif rotatif de scellement et de coupe selon la revendication 2, dans lequel le mécanisme d'entraînement comprend un élément élastique (28) et un élément de pression (9) ; l'élément élastique (28) est placé entre le couteau (25) et le porte-couteau (22) et entraîne le couteau (25) à se rétracter ; un élément d'action (250) est relié au couteau (25) ; l'élément de pression (9) est relié à l'arbre rotatif (20) ; l'élément de pression (9) a une surface d'arc de pression (90) ; l'élément de pression (9) est configuré pour agir sur l'élément d'action (250) par la surface d'arc de pression (90) afin d'entraîner l'extension du couteau (25).

4. Le dispositif rotatif de scellement et de coupe selon la revendication 3, dans lequel l'élément d'action (250) est un poteau de guidage, et le poteau de guidage est fourni de manière coulissante dans un trou de guidage du porte-couteau (22).

5. Le dispositif rotatif de scellement et de coupe selon la revendication 1, dans lequel l'arbre rotatif (20) du mécanisme supérieur de scellement et de coupe est fixé de manière rotative sur la plaque de guidage supérieure (3) ; la plaque de guidage supérieure (3) est fixée verticalement sur le cadre (1) ; un ressort (5) destiné à entraîner la plaque de guidage supérieure (3) vers le bas est fixé entre le cadre (1) et la plaque de guidage supérieure (3).

6. Le dispositif rotatif de scellement et de coupe selon la revendication 1, dans lequel un engrenage supérieur (6) est relié à l'arbre rotatif (2) du mécanisme supérieur de scellement et de coupe ; un engrenage inférieur (7) est relié à l'arbre rotatif du mécanisme inférieur de scellement et de coupe ; l'engrenage supérieur (6) s'engrène avec l'engrenage inférieur (7) ; la source d'énergie est en liaison de transmission avec l'engrenage inférieur (7) ou l'engrenage supérieur (6) par l'intermédiaire d'un engrenage de transmission (8).

7. Le dispositif rotatif de scellement et de coupe selon la revendication 1, dans lequel l'arbre rotatif (20) est relié à une position centrale de la base rotative (21) ; les deux extrémités de la base rotative (21) sont respectivement pourvues de l'ensemble de scellement et de coupe.

8. Le dispositif rotatif de scellement et de coupe selon la revendication 1, dans lequel la base rotative (21) est pourvue d'une rainure de glissement (210) ; le bloc de glissement (23) est placé de manière coulissante dans la rainure de glissement (210) de la base rotative (21).

9. Le dispositif rotatif de scellement et de coupe selon la revendication 1, dans lequel la roue de guidage (29) est une poulie ou un palier.
